(19) Europäisches Patentamt
European Patent Office
Office européen des brevets

(11) EP 4 585 883 A2

(12) EUROPEAN PATENT APPLICATION

(43) Date of publication:
16.07.2025 Bulletin 2025/29

(51) International Patent Classification (IPC):
$G01C\ 1/08^{(2006.01)}$   $G01C\ 17/02^{(2006.01)}$
$G01C\ 17/12^{(2006.01)}$   $G01C\ 21/02^{(2006.01)}$
$G01C\ 21/08^{(2006.01)}$

(21) Application number: 24220810.6

(22) Date of filing: 17.12.2024

(52) Cooperative Patent Classification (CPC):
G01C 17/12; G01C 1/08; G01C 17/02; G01C 21/02;
G01C 21/08

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 21.12.2023 IT 202300027717

(71) Applicant: Facheris, Tarcisio
24030 Presezzo (IT)

(72) Inventor: Facheris, Tarcisio
24030 Presezzo (IT)

(74) Representative: Tirloni, Bartolomeo et al
BTA Srl
2nd floor
Viale Papa Giovanni XXIII, 106
24121 Bergamo (IT)

(54) **KIT, SYSTEM AND METHOD FOR DETERMINING THE POSITION OF AN INDIVIDUAL ON THE SEA SURFACE**

(57)     A kit (AA, APP) is proposed to determine the geographical position of an individual (P). The kit comprises:

an alignment apparatus (AA) capable of being rigidly connected to a magnetic compass (BM) to align a lubber line of the magnetic compass in the direction of the Sun, wherein, when the lubber line of the magnetic compass (BM) is aligned in the direction of the Sun, an angle between the lubber line and the direction of Magnetic North on a horizontal plane indicated by the magnetic indicator of the magnetic compass represents a detection angle of the Sun ($\alpha_B$);

a software application (APP) executable by a processing device (PD), the software application being configured to, when executed by the processing device, cause the processing device to determine said geographical position as a function of:
- said detection angle ($\alpha_B$) of the Sun;
- an angle of elevation ($\delta_1(t)$) of the Sun, and
- a date (D) and a time (TMG) of measurement of said detection angle ($\alpha_B$) of the Sun and of said angle of elevation ($\delta_1(t)$) of the Sun.

A system comprising the kit and a corresponding method for determining the geographical position of the individual are also proposed.

Figure 1A

**Description**

Technical field

The present invention relates to a kit, a system, and a method for determining the geographical position (or astronomical fix) of an individual on the surface of the sea.

Technological background

The technological background of the present invention is introduced below through the discussion of techniques relevant to the context of the present invention. However, even when this discussion refers to documents, acts, artifacts, and the like, it does not suggest or acknowledge that the discussed techniques are part of the prior art or constitute common knowledge in the field relevant to the present invention.

One of the most traditional approaches to determine (at least approximately) the geographical position of an individual on the surface of the sea is based on observing one or more celestial bodies and measurements of corresponding parameters using mechanical measuring devices (namely, manually controlled). An example of such mechanical measuring apparata is represented by the sextant, which allows the measurement of the Sun's elevation angle.

One of the most recent and widespread approaches, to determine an individual's geographical position on the surface of the Earth (namely, on the surface of the Earth or on the surface of the sea) is based on electronic systems, such as the GPS system ("Global Positioning System"). This system consists of a dedicated network of orbiting artificial satellites designed to provide radio signals to a receiving device (e.g., a mobile terminal), which processes the radio signals to provide corresponding tracking information.

Summary of the invention

With regard to the determination of the geographic position based on the GPS system, the Applicant has observed that, although this system offers (at least theoretically) a high accuracy in any weather condition and in any place on the Earth's surface, any failures of the satellites or of the receiving apparatus and/or the presence of obstacles along the radio channels between the satellites of the GPS system and the receiving apparatus may determine an unavailability of the tracking information.

Although mechanical measuring apparatus are not affected by such problems, the use of the sextant alone involves the preparation of several and complex observations during the day, and the measurement of the elevation angle of the Sun at the passage of the meridian (corresponding to local midday), which in the event of cloud cover is not possible to sustain.

The present invention relates to a kit, a system and a method as defined in the attached independent claims, with optional, derogable characteristics, which are defined in the dependent claims.

In particular, the present invention relates to a kit, a system and a method for determining, by measuring the angle of the elevation of the Sun with the sextant and the detection angle of the Sun with a magnetic compass, the geographical position of an individual at any time of the day, to be used advantageously, but not limited to, in response to emergency situations (e.g., satellite or receiver malfunctions and/or the presence of obstacles along radio channels) and/or for recreational purposes.

The Applicant therefore proposes a simple and straightforward approach, valid throughout the entire day, that requires only a single observation of the Sun. The proposed approach, which is not intended to replace astronomical survey methods based on the professional use of sextant and nautical ephemerides, is capable of providing sufficient accuracy for the purposes for which it was designed.

An aspect of the present invention relates to a kit for determining the geographical position of an individual. According to one embodiment, the kit comprises an alignment apparatus designed to be rigidly connected to a magnetic compass to align a lubber line of the magnetic compass in the direction of the Sun. When the lubber line of the magnetic compass is aligned in the direction of the Sun, an angle between the lubber line and the direction of the Magnetic North on a horizontal plane indicated by the magnetic indicator of the magnetic compass, represents a detection angle of the Sun.

According to one embodiment, the kit also comprises a software application executable by a processing device. According to one embodiment, the software application is configured to, when executed by the processing device, cause the processing device to determine the geographical position based on said detection angle of the Sun, an angle of elevation of the Sun, and a date and time of measurement of said detection angle of the Sun and of said angle elevation of the Sun.

According to one embodiment, the software application is configured to, when executed by the processing device, cause the processing device to:

- determine, for each of a plurality of attempt values of magnetic declination, a respective Sun azimuth attempt value, starting from said detection angle of the Sun;
- determine, for each Sun azimuth attempt value, a respective candidate geographical position according to said Sun azimuth attempt value, with the angle of elevation of the Sun, and with date and time of measurement;
- for each candidate geographical position, determine, on the basis of a plurality of correspondences between known values of magnetic declination and respective known geographical positions, the known value of magnetic declination corresponding to said candidate geographical position;
- determine said geographical position as the candidate geographical position, among the plurality of candidate geographical positions, whose known value of magnetic declination differs from the respective attempt value of magnetic declination by a quantity less than a predefined threshold quantity.

According to one embodiment, said plurality of attempt values of magnetic declination comprises a plurality of negative attempt values of magnetic declination and a plurality of positive attempt values of magnetic declination.

According to one embodiment, the known values of magnetic declination comprise negative known values of magnetic declination and positive known values of magnetic declination.

According to one embodiment, the software application is configured to, when executed by the processing device, cause the processing device to:
determine said geographical position as the candidate geographical position, among the plurality of candidate geographical positions, whose negative known value of magnetic declination differs from the respective negative attempt value of magnetic declination by said quantity, or as the candidate geographical position, among the plurality of candidate geographical positions, whose positive known value of magnetic declination differs from the respective positive attempt value of magnetic declination of said amount.

According to one embodiment, said plurality of correspondences between known values of magnetic declination and respective known geographical positions comprises:

a plurality of known values of magnetic declination referred to a reference time and each associated to a respective known geographical position; and
for each known geographical position, an indication of a variation of the respective known value of magnetic declination over time with respect to the reference time.

According to one embodiment, the alignment apparatus comprises a first alignment device suitable for aligning the lubber line of the magnetic compass in the direction of the Sun when the angle of elevation of the Sun is within a first range of angles of elevation of the Sun, and a second alignment device suitable for aligning the lubber line of the magnetic compass in the direction of the Sun when the angle of elevation of the Sun is within a second range of angles of elevation of the Sun different from the first range.

According to one embodiment, each of said first and second alignment device comprises a respective receiving plane and, orthogonally to the receiving plane, a respective reference element suitable for, when invested by sunlight, projecting a corresponding shadow onto the respective receiving plane.

According to one embodiment, each of said first and second alignment device, when rigidly connected to the magnetic compass, allows to determine the alignment of the lubber line of the magnetic compass in the direction of the Sun when the respective reference element, the shadow of the reference element projected on the respective receiving plane, and the lubber line of the magnetic compass are aligned with each other.

According to one embodiment, the receiving plane of the first alignment device is parallel to a plane of the magnetic compass when the first alignment device is rigidly connected to the magnetic compass.

According to one embodiment, the receiving plane of the second alignment device is inclined at 45° relative to the plane of the magnetic compass when the second alignment device is rigidly connected to the magnetic compass.

According to one embodiment, the first alignment device comprises a reflective element configured for reflecting the shadow of the respective reference element projected onto the respective receiving plane.

Another aspect of the present invention relates to a system comprising the kit as defined above, and at least one of the magnetic compass and a sextant configured for measuring said angle of elevation of the Sun.

A further aspect of the present invention relates to a method.

According to one embodiment, the method comprises:

measuring the angle of elevation of the Sun;
rigidly connecting the alignment apparatus of the kit as defined above to a magnetic compass;
aligning the magnetic compass in the direction of the Sun by means of the alignment apparatus;
measuring a detection angle of the Sun as the angle between the lubber line of the magnetic compass and the direction of the Magnetic North on a horizontal plane;

providing the measurement of the angle of elevation of the Sun, the measurement of said detection angle of the Sun, and a date and a time of measurement of said detection angle of the Sun and said angle of elevation of the Sun to the software application of said kit; and

determining said geographical position based on said detection angle of the Sun, said angle of the elevation of the Sun, and said date and time of measurement.

Brief Description of the figures

The features and the advantages of the present invention outlined in the previous section, as well as other features and advantages, will become clear from the following detailed description of its possible exemplary and non-limiting embodiments of the present invention. The following description will be better understood by referring to the attached figures, in which:

**Figure 1A** schematically and functionally shows a system according to embodiments of the present invention;

**Figures 1B** and **1C** show an alignment apparatus of the system of **Figure 1A** according to embodiments of the present invention;

**Figures 1D** and **1E** schematically show the operation of the alignment apparatus shown in Figures 1B and 1C according to embodiments of the present invention;

**Figures 2A** and **2B** show, respectively, an astronomical reference system and a local reference system;

**Figures 3A-3H** show graphs representing variations in the solar hour angles throughout the day at respective locations and on respective days of the year;

**Figure 4** shows a procedure for determining the geographical position of an individual according to embodiments of the present invention, and

**Figure 5** shows the relationships of the Sun azimuth as a function of magnetic declination and the detection angle of the Sun according to embodiment of the present invention.

Detailed description of exemplary embodiments of the present invention

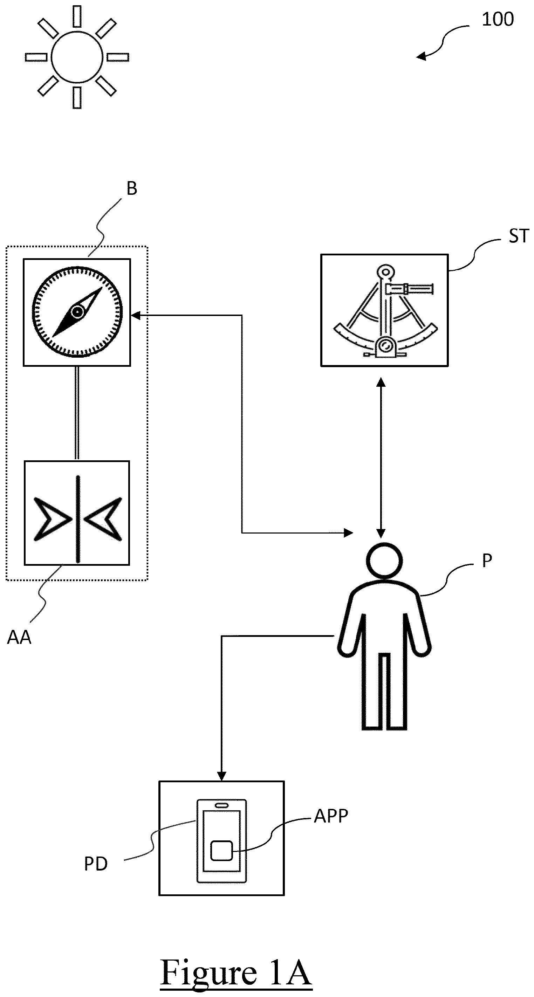

**Figure 1A** schematically and functionally shows a system **100** according to embodiments of the present invention.

In the following, when one or more features of the system **100** (and of a corresponding procedure) are introduced by the words "according to one embodiment ", they should be interpreted as additional features or an alternative to any previously introduced feature, unless otherwise indicated and/or unless there is a clear incompatibility between combinations of features that would be immediately evident to a person skilled in the art.

The system **100** is designed to determine the geographical position of an individual **P** on the surface of the sea, for example, in terms of geographical coordinates (in particular, latitude and longitude).

For the purposes of the present invention, individual **P** represents the user of system **100** (also referred to in the following as the observer).

In the following, for brevity, the procedure for determining the geographical position of individual **P** on the surface of the sea using system **100** will be referred to as the geo-positioning procedure.

According to one embodiment, the system **100** comprises a magnetic compass **B.** For the purposes of the present invention, the magnetic compass **B** comprises a magnetic indicator that can be oriented according to the Earth's magnetic field (for example, a magnetic needle or a graduated magnetic disk).

Dimensions and construction features of the magnetic compass **B** are not limiting for the present invention, as the principles of the present invention being adaptable to any commercially available magnetic compass. Without losing generality, the magnetic compass **B** may, for example, be the Plastimo Iris 50 magnetic compass.

According to one embodiment, the system **100** comprises an alignment apparatus **AA** capable of being rigidly connected to magnetic compass **B** to align the compass **B** (for example, the lubber line marked on it) in the direction of the Sun (so that individual **P** is facing a direction, in the following referred to as the observation direction, coincident with the direction of the Sun). In this way, during the geo-positioning procedure, when the magnetic compass **B** is aligned in the direction of the Sun, the angle between the observation direction and the direction of Magnetic North on the horizontal plane indicated by the magnetic indicator of compass **B** and measured (namely, read) by individual **P** represents the detection angle of the Sun (i.e., the angle on the horizontal plane of the Sun relative to Magnetic North or Compass North). Specifically, as further discussed below, the Sun azimuth can be determined, starting from the detection angle of the Sun, based upon the magnetic declination.

According to one embodiment, the system **100** comprises a sextant **ST** to measure the angle of elevation of the Sun.

According to one embodiment, as better described below, a first phase of the geo-positioning procedure (in the following, the measurement phase) involves that individual **P** measure the detection angle of the Sun (prior alignment of the magnetic compass **B**, by means of the alignment apparatus **AA**, in the direction of the Sun) and the angle of elevation of the Sun (for example, by means of the sextant **ST**).

According to one embodiment, the system **100** comprises a processing device **PD** and a software application **APP** executable by the processing device **PD**.

According to one embodiment, as better described below, a second phase of the geo-positioning procedure (in the following, the calculation phase), following the measurement phase, involves that the software application **APP**, when executed by the processing device **PD**, cause or configure the processing device **PD** to calculate the geographic position of individual P in agreement with the measurements taken (in particular, the measurement of the angle of elevation of the Sun, and the measurement of the detection angle of the Sun), and in accordance with the date and time of the measurements (the analytical relationships that enable the calculation of the individual geographic position **P** in agreement with the measurements taken and in agreement with date and time of the measurements will be discussed below).

In the following, when referring to the date and time of the measurements, it is understood that the date, hour, and minute at which the detection angle of the Sun is measured coincide with the date, hour, and minute at which the angle of elevation of the Sun is measured, so that the date and time of the measurements of the detection angle of the Sun and the angle of elevation of the Sun will also be concisely referred to as the date and time of measurement.

Without limiting generality, the software application **APP** may comprise a mobile application (e.g., a mobile app, a web app, and/or a hybrid app).

Without limiting generality, the software application **APP** (such as a mobile application) may be a dedicated software application (e.g., a software application specifically developed for the purpose of implementing the calculation phase of the geo-positioning procedure) or a non-dedicated software application (e.g., a "general-purpose" software application in which the calculation phase of the geo-positioning procedure represents one or more services already available and can be activated and/or configured by or on behalf of the system **100** user).

In the exemplary (but non-limiting) shown embodiment, the processing device **PD** comprises a mobile device. Without limiting generality, the mobile device may comprise a device associated with the individual **P** (for example, a smartphone, as shown illustratively, a personal digital assistant (PDA), a tablet, or a wearable device, such as a smartwatch), or any electronic device with processing capabilities (for example, a personal computer or a laptop).

In the exemplary (but non-limiting) considered embodiment in which the processing device **PD** comprises a mobile device, the software application **APP** may comprise a mobile "app" designed to be downloaded from a digital distribution platform associated with the operating system of the mobile device and installed on it. Without limiting generality, the installation of the software application **APP** on the mobile device may involve a registration and/or authentication process, and/or the definition of settings and/or preferences.

Without limiting generality, the software application **APP**, in addition of calculating the geographical location of the individual **P**, may also be further configured to allow access to historical geographical locations (or a subset of them) (for example, presenting these historical geographical locations in aggregated, statistical form, and/or through charts, maps, and summary dashboards).

According to one embodiment, the alignment apparatus **AA** and the software application **APP** together form a kit that, in association with the magnetic compass **B**, the sextant **ST**, and the processing device **PD**, allows the implementation of the geo-positioning procedure.

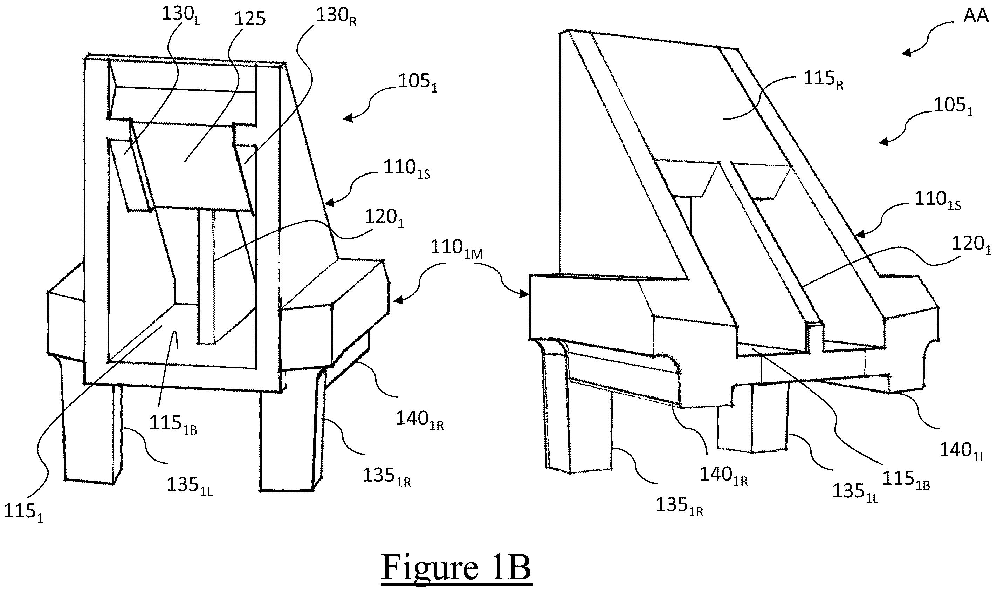

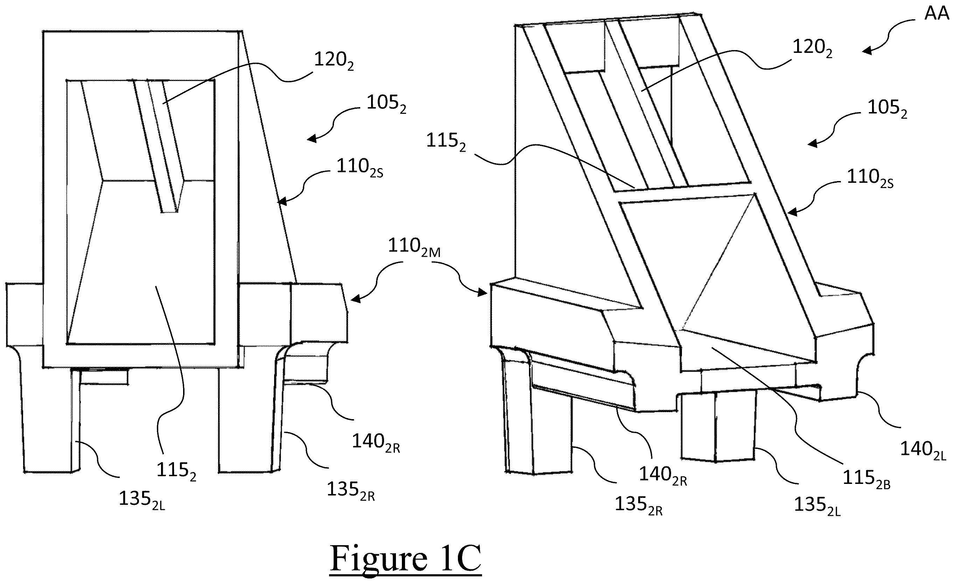

With reference now to **Figures 1B** and **1C**, they illustrate the alignment apparatus **AA** according to embodiments of the present invention.

According to one embodiment, the alignment apparatus **AA** comprises one or more pairs of alignment devices, for example a first alignment device $105_1$, shown in **Figure 1B** in a front perspective view (left drawing) and in a rear perspective view (right drawing), and a second alignment device 1052, shown in Figure 1C in a front perspective view (left drawing) and in a rear perspective view (right drawing). Without losing generality, the alignment apparatus **AA** may comprise any number of pairs of alignment devices (as further discussed below). In the following, the first alignment device $105_1$, and the second alignment device $105_2$ will also be referred as the alignment device(s) $105_1, 105_2$, when distinguishing between the first alignment device $105_1$ and the second alignment device $105_2$ is not considered relevant for the characteristics being discussed. An analogous notation will be also used for corresponding or equivalent components or parts of the alignment devices.

According to one embodiment, each alignment device $105_1, 105_2$ comprises an interception structure $110_{1S}, 110_{2S}$ designed to intercept solar rays, and a mounting structure $110_{1M}, 110_{2M}$ designed to allow the reversible mounting of the alignment device $105_1, 105_2$ into the magnetic compass **B** (and thus, the rigid connection between the alignment device $105_1, 105_2$ and the magnetic compass **B**).

According to one embodiment, each interception structure $110_{1S}, 110_{2S}$ (or, more generally, each alignment device $105_1, 105_2$) comprises a respective receiving plane $115_1, 115_2$ and a respective reference element $120_1, 120_2$ designed to, when exposed to solar rays, generate or project a corresponding shadow onto the respective receiving plane

$115_1, 115_2$.

According to one embodiment, each reference element $120_1, 120_2$ extends from the respective receiving plane $115_1, 115_2$ (e.g., orthogonally thereto).

According to one embodiment, each alignment device $105_1, 105_2$, allows, during use (i.e., when it is rigidly connected to (namely, mounted or assembled onto) the magnetic compass **B**), the determination of the alignment of the magnetic compass **B** in the direction of the Sun when the reference element, the shadow of the reference element $120_1, 120_2$ projected onto the respective receiving plane $115_1, 115_2$, and the sighting line of the magnetic compass B are aligned with each other.

According to one embodiment, each interception structure $110_{1S}, 110_{2S}$ present a substantially wedge-shaped configuration, open at the front and rear (with the front opening allowing the user to view the reference element $120_1, 120_2$ and the respective shadow, and the rear opening allowing sunlight to reach the receiving plane $115_1, 115_2$ and the reference element $120_1, 120_2$).

According to one embodiment, the reference element $120_1, 120_2$ has a reduced or relatively reduced width (specifically, a very reduced width compared to height of the reference element, the latter being defined by the elevation of the reference element $120_1, 120_2$ relative to the corresponding receiving plane $115_1, 115_2$). Without losing generality, the reference element $120_1, 120_2$ may, for example, take the form of a rod, blade, or thin wall (as illustratively shown).

According to one embodiment, each alignment device $105_1, 105_2$ is configured to align the magnetic compass B in the direction of the Sun when the angle of elevation of the Sun falls within a respective (and different) range of angles of elevation of the Sun.

In particular, in the exemplary shown embodiment, the first alignment device $105_1$ is configured to align the magnetic compass **B** in the direction of the Sun when the angle of elevation of the Sun is between 0° and 45°, while the second alignment device $105_2$ is configured to align the magnetic compass **B** in the direction of the Sun when the angle of elevation of the Sun is between 45° and 90° (hence, during the measurement phase of the geo-positioning procedure, the use of the first alignment device $105_1$ or the second alignment device $105_2$ depends on the angle of elevation of the Sun at the time of measurement).

According to one embodiment, the range of angles of elevation of the Sun for which the alignment device $105_1, 105_2$ is configured to be used depends on one or more geometric features of the respective interception structure $110_{1S}, 110_{2S}$, such as (but not limited to) the orientation of the inclined plane $115_2$ and/or the orientation of the reference element $120_1, 120_2$.

In the exemplary embodiment considered, wherein the range of angles of elevation of the Sun for which the first alignment device $105_1$ is configured to be used is between 0° and 45°, the receiving plane $115_1$ is shaded for angles of elevation of the Sun greater than 45°. To achieve this, in the exemplary claim considered (and illustrated in **Figure 1B**), the receiving plane $115_1$ is parallel (in the use) to the (horizontal) plane of the magnetic compass **B** (and substantially corresponds to a portion of a base wall $115_{1B}$ of the interception structure $110_{1S}$), and the interception structure $110_{1S}$ features a rear wall $115_R$ (inclined at 45° relative to the receiving plane $115_1$) that covers an upper region of the respective rear opening (the extent of the upper region of the rear opening covered by the rear wall $115_R$ is such that it shades the receiving plane $115_1$ for angle of elevation of the Sun greater than 45°).

In the exemplary considered embodiment, the reference element $120_1$ extends between the receiving plane $115_1$ and a lower edge of the rear wall $115_R$, a rear face of the reference element $120_1$ (inclined at 45° relative to the receiving plane $115_1$) extending into a lower region of the rear opening of the interception structure $110_{1S}$ (specifically, between a lower edge of the rear wall $115_R$ and the base wall $115_{1B}$ of the interception structure $110_{1S}$).

According to one embodiment, the first alignment device $105_1$ further comprises a reflective element 125 (e.g., a flat mirror) configured to reflect the shadow of the reference element $105_1$ projected onto the receiving plane $115_1$.

In particular, the reflective element 125 is configured to reflect the shadow of the reference element $120_1$ projected onto the receiving plane $115_1$ toward the observer's eye (parallel to the receiving plane $115_1$), for easier viewing. The shadow of the reference element $120_1$ projected onto the receiving plane $115_1$ might not be easily visible to the observer, as, in use, the observer's eyes could be approximately at the level of, or even below, the receiving plane $115_1$.

In the exemplary considered embodiment, in which the range of angles of elevation of the Sun for which the first alignment device $105_1$ is suitable to be employed is between 0° and 45°, the reflecting element 125 is inclined at 45° with respect to the receiving plane $115_1$, so as to reflect the shadow of the reference element $120_1$ projected onto the receiving plane $115_1$ towards the observer's eye (which is parallel to the plane of the magnetic compass).

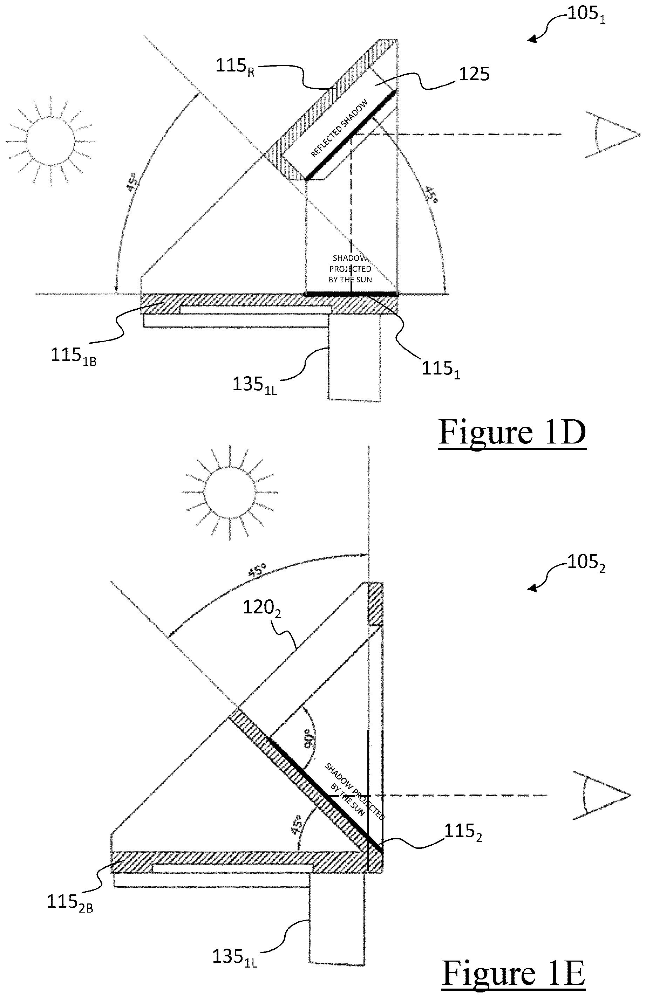

The operation of the first alignment device $105_1$ is shown in the schematic representation of **Figure 1D**, in which the shadow of the reference element $120_1$ projected onto the receiving plane $115_1$, the shadow reflected by the reflecting element 125, and the angular relationships between the reference element $120_1$ and the receiving plane $105_1$ are visible.

According to one embodiment, the reflecting element 125 is inserted (e.g., by interlocking) into opposing lateral grooves $130_L, 130_R$ provided in the rear wall $115_R$.

In the exemplary considered embodiment, in which the range of angles of elevation of the Sun for which the second alignment device $105_2$ is suitable for use is between 45° and 90°, the receiving plane $115_2$ is in shadow for angles of elevation of the Sun below 45°. To achieve this, in accordance with the exemplary claim considered (and illustrated in **Figure 1C**), the receiving plane $115_2$ is (in use) inclined by 45° with respect to the (horizontal) plane of the magnetic compass **B** (and with respect to a base wall $115_{2B}$ of the interception structure $110_{2S}$).

In the exemplary considered embodiment, the reference element $120_2$ extends (for example, orthogonally) between the receiving plane $115_2$ and an upper end of the interception structure $110_{2S}$, with the reference element $120_2$ thus being inclined by 90° with respect to the receiving plane $115_2$.

The operation of the second alignment device $105_2$ is shown in the schematic representation of **Figure 1E,** where the shadow of the reference element $120_2$ projected onto the receiving plane $115_2$, and the angular relationships between the reference element $120_2$ and the receiving plane $115_2$ are visible.

Therefore, in the exemplary shown embodiment in which the alignment apparatus **AA** comprises two alignment devices $105_1, 105_2$, the receiving planes $115_1, 115$, are mutually inclined by 45° (so that each alignment device can be used for respective ranges of angles of elevation of the Sun 45°, that is, between 0° and 45° and between 45° and 90°).

The alignment apparatus **AA** advantageously features a construction geometry of the alignment devices $105_1, 105_2$ with high symmetry (in particular, the same length for the rear wall $115_R$ and the receiving plane $115_2$, and the same lengths, projected onto the vertical plane facing the observer's eye, for the reference elements $120_1, 120_2$ and their respective shadows). This allows for a considerable simplicity in the construction of the alignment apparatus **AA** and a significant ease of use. In particular, symmetric ranges of angles of elevation for use (between 0° and 45° and between 45° and 90°) result in a more intuitive interaction with the alignment apparatus **AA** (especially, but not exclusively, in selecting the most suitable alignment device), and the same lengths, projected onto the vertical plane, of the reference elements $120_1, 120_2$ and their respective shadows make it easier to achieve the correct alignment between the reference element $120_1, 120_2$ and the respective shadow.

Since the inclinations of the reflective element **125,** the rear wall $115_R$, and the receiving plane $115_1$ are substantially dictated by the laws of optical reflection, alternative claims of alignment apparata can be envisioned, not shown, comprising different pairs of first and second alignment devices that substantially differ from one another in terms of the inclination of the receiving plane of the second alignment device and the extension of the rear wall of the first alignment device.

To mere of non-limiting example, the alignment apparatus may comprise a pair of alignment devices designed to be used for angles of elevation of the Sun intervals between 0° and 30° and between 30° and 90°, and comprising:

- a first alignment device (similar to the first alignment device $105_1$) whose receiving plane is parallel (in use) to the plane of the magnetic compass **B** and whose rear wall, inclined by 45° with respect to the receiving plane, covers an upper region of the respective rear opening for an extent such as to shade the receiving plane for angles of elevation of the Sun greater than 30° (the upper region of the rear opening covered by the rear wall thus having a greater extent than the upper region of the first alignment device $105_1$); and
- a second alignment device, similar to the second alignment device $105_2$, whose receiving plane is inclined by 30° with respect to the plane of the magnetic compass **B**, such that it is shaded for angles of elevation of the Sun less than 30°.

To mere of further non-limiting example, the alignment apparatus may comprise a pair of alignment devices suitable for being used for angles of elevation of the Sun ranges between 0° and 60° and between 60° and 90°, and comprising:

- a first alignment device (similar to the first alignment device $105_1$), whose receiving plane is parallel (in use) to the plane of the magnetic compass **B** and whose rear wall, inclined by 45° with respect to the receiving plane, covers an upper region of the respective rear opening for an extent such that it shades the receiving plane for angles of elevation of the Sun greater than 60° (the upper region of the rear opening covered by the rear wall thus having a smaller extent than the upper region of the first alignment device $105_1$); and
- a second alignment device, similar to the second alignment device $105_2$, whose receiving plane is inclined by 60° with respect to the plane of the magnetic compass **B**, so as to remain in shadow for angles of elevation of the Sun lower than 60°.

According to one embodiment, each mounting structure $110_{1M}, 110_{2M}$ comprises a respective pair of feet $135_{1L}, 135_{1R}, 135_{2L}, 135_{2R}$, arranged in a front region of the mounting structure and extending substantially orthogonally to the base wall $115_{1B}, 115_{2B}$, beneath it, and a respective pair of guides $140_{1L}, 140_{1R}, 140_{2L}, 140_{2R}$, extending parallel to the base wall $115_{1B}, 115_{2B}$, beneath it.

The mounting structure $110_{1M}, 110_{2M}$ is particularly (although not exclusively) advantageous for the assembly of the alignment device $105_1, 105_2$ to a magnetic compass (such as the mentioned above Plastimo Iris 50 magnetic compass) provided, in one of the upper region of the magnetic compass, with longitudinal lateral grooves (into which the guides $140_{1L}, 140_{1R}$ of the first alignment device $105_1$ and the guides $140_{2L}, 140_{2R}$ of the second alignment device $105_2$ are

configured to slide) and vertical lateral openings (into which the feet $135_{1L}, 135_{1R}$ of the first alignment device $105_1$ and the feet $135_{2L}, 135_{2R}$ of the second alignment device $105_2$ are configured to insert, for example by press fit, to achieve locking to the magnetic compass).

In any case, the mounting structure $110_{1M}, 110_{2M}$ may be realized differently. Without loss of generality, it is possible to provide a different mounting structure, which may, for example, be fixed (to allow mounting on magnetic compasses with different configurations) or adjustable (for example, to adapt in shape and/or size to substantially any type and/or configuration of magnetic compass).

According to one embodiment, each alignment device $105_1, 105_2$ is made in a single piece (except for the reflective element **125**).

According to one embodiment, each alignment device $105_1, 105_2$ is made (at least partially) of nylon, in order to provide high resistance to abrasion, breakage, chemical attacks, ultraviolet rays, and thermal shocks, as well as high rigidity and dimensional stability.

According to one embodiment, each alignment device $105_1, 105_2$ is made using a 3D printing process, such as MJF ("Multi Jet Fusion") technology, in order to provide precision and accuracy in manufacturing.

In alternative embodiments, not shown, the intercepting structure $110_{1S}, 110_{2S}$, and the mounting structure $110_{1S}, 110_{2S}$ are separate components that can be assembled together (for example, in a reversible manner). In these claims, the mounting structure may represent an external component to the alignment device, with the mounting structure serving, for example, as a complement to the magnetic compass or an independent accessory that can be associated with any magnetic compass.

To describe the calculation phase of the geo-positioning procedure, the main aspects of the underlying mathematical discussion will be presented below. For better clarity, this mathematical discussion is divided into the following sections:

1) determination of the position of the Sun based on the geographical position of an individual. This section will present the key relations useful for determining the position of the Sun in an astronomical reference system;

2) change of reference system. In this section there will be exposed the key relations useful for determining the position of the Sun in a local reference system.

3) determination of the geographical position of the individual based on the position of the Sun. In this section the main relationships will be exposed, developed by the Applicant, for determining the geographical position of the individual based on the position of the Sun.

<u>Determination of the position of the Sun based on the geographical position of an individual</u>

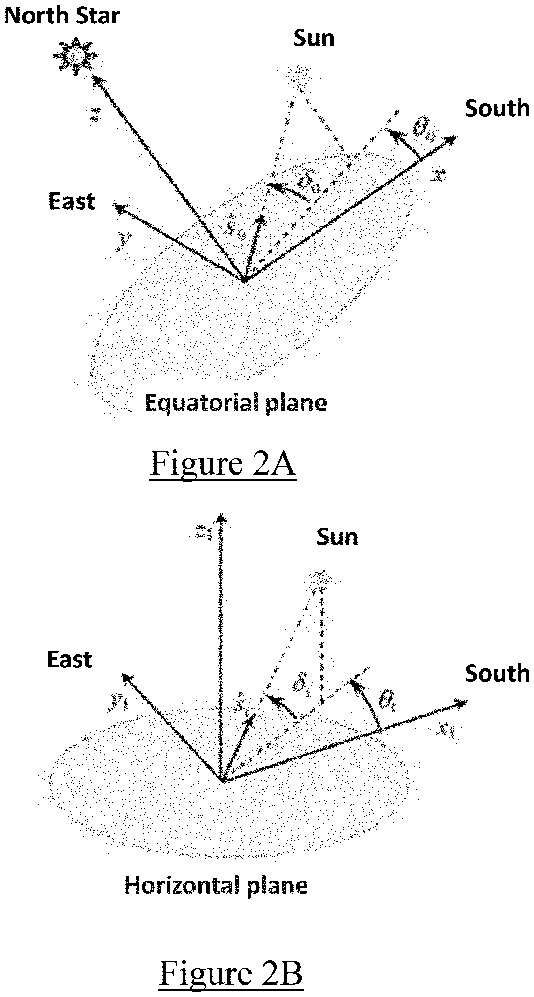

Consider the astronomical reference system (x,y,z), shown in **Figure 2A,** having origin in an observation point on the surface of the Earth (the observation point representing the geographical position of the individual), with the z-axis parallel to the axis of the Earth (and points toward the North Star), while the x- and y-axes lie on a plane parallel to the equatorial plane of the Earth (x- and y-axes pointing South and East, respectively). In the astronomical reference system (x,y,z), the following astronomical coordinates are also indicated as functions of the time variable t:

the declination of the Sun $\delta_o(t)$, that is the angle formed by the rays of the Sun with the equatorial plane of the Earth (such angle being, for example, positive if the Sun is above the Earth's equatorial plane, as shown in the figure); and the hour angle of the Sun $\theta_o(t)$, which is the angular displacement of the Sun toward the East or West (such angle being, for example, positive toward the West, in a clockwise direction as viewed from the North Star, and negative toward the East, in a counterclockwise direction as viewed from the North Star).

The declination of the Sun $\delta_o(t)$, can be expressed using the following equation:

$$\delta_o(t) = - \arcsin [\sin(\delta_T)\, \cos(\alpha(t))] \qquad (1)$$

where $\delta_T = 23.5°$, and it represents the tilt of the axis of the Earth relative to the plane of the orbit of the Earth. The angular position of the Earth $\alpha(t)$ relative to the winter solstice can be expressed by the following relation:

$$\alpha(t) = \omega_M t + ETog(t) - Etog(0) \qquad (2)$$

where:

- $\omega_M = 2\pi/T$, and represents the mean angular velocity of the Earth along the orbit of the Earth; and

- *T* represents the duration (expressed in days) of a tropical year (that is, the time interval between two consecutive vernal equinoxes), and is equal to 365,242217 days; and
- *Etog(t)* represents the contribution to the equation of time in angular terms due to the eccentricity of the orbit of the Earth.

The contribution to the equation of time in angular terms due to the eccentricity of the orbit of the Earth *Etog(t)* can be expressed by the following relation:

$$Etog(t) = 2\varepsilon \sin [\omega_M (t - T_\phi)] + 5/4 \, \varepsilon^2 \sin [2\omega_M (t - T_\phi)] \qquad (3)$$

where:

- $\varepsilon$ = 0.016719, and represents the eccentricity of the orbit of the Earth;
- $T_\phi$ represents the perihelion shift (expressed in fractions of a year) with respect to the winter solstice; since the precession of the equinoxes is equal to 1 tropical year every 25800 years, each year the perihelion shift $T_\phi$ increases by an amount $\Delta T_\phi$ = 365,242217 / 25800 = 0,0141566 (days/year), corresponding to 20,4 minutes/year (therefore, the perihelion shift $T_\phi$ can be determined starting from the perihelion shift $T_\phi$ of a reference year, and adding or subtracting to it the amount $\Delta T_\phi$ for each year following or preceding the reference year).

The hour angle of the Sun $\theta_o(t)$ can be expressed by the following relation:

$$\theta_o(t) = (TMG + ET(t) + Long / \omega_a - 12) \, \omega_a \qquad (4)$$

where:

- *TMG* represents the time (Greenwich Mean Time) of measurement (expressed in hours and fractions of an hour);
- *Long* represents the longitude (it is positive if the observation location is east of Greenwich);
- $\omega_a$ represents the angular velocity (constant) of the rotation of the Earth around its axis ($\omega_a$ = 15°/hour); and
- *ET(t)* comprises the equation of time in temporal terms.

The equation of time in temporal terms *ET(t)* can be expressed by the following relations:

$$ET(t) = Etg(t) / \omega_a \qquad (5)$$

$$Etg(t) = Etog(t) + Etag(t) \qquad (6)$$

$$Etag(t) = arctan [tan(\alpha(t)) / cos(\delta_T)] - \alpha(t) \qquad (7)$$

where:

- *Etg(t)* represents the equation of time in angular terms;
- *Etag(t)* represents the contribution to the equation of time in angular terms due to the inclination of the axis of the Earth.

The time variable *t* has zero in correspondance to the last winter solstice. Since relations (1) and (3) have an annual periodicity, the time variable *t* can be determined as the difference, normalized with respect to the duration of a tropical year *T*, between the date of measurement (indicated as *D* and expressed, for example, in days and fractions of a day relative to the birth of Christ) and a reference date $D_{RIF}$ (for example, expressed in days and fractions of a day relative to the birth of Christ) corresponding to a reference winter solstice (for example, any past winter solstice): $t = (D - D_{RIF}) / T$ (8) Due to the inherent periodicity of relations (1) and (3), it is convenient to use only the fractional part of the time variable *t*, so as to implicitly obtain the position of the Earth relative to the last solstice (rather than relative to the reference winter solstice $D_{RIF}$):

$$D = (A-1) * 365 + GB_A + G + H_G / 24 + M / (24 * 60) \qquad (9)$$

$$D_{RIF} = (A_{RIF} -1) * 365 + GB_{RIF} + G_{RIF} + H_{RIF} / 24 + M / (24 * 60) \qquad (10)$$

where:

- $A$ represents the year of the date of measurement $D$;
- $GB_A$ represents the number of leap days elapsed between the birth of Christ and the year $A$;
- $G$ represents the day of the year $A$;
- $H_G$ represents the Greenwich hour of the day of the year $A$ (that is, the hour of the time of measurement *TMG*);
- $M$ represents the minutes of the Greenwich hour of the day $G$ (that is, the minutes of the time of measurement *TMG*);
- $A_{RIF}$ represents the year of the date of reference $D_{RIF}$ (for example, the year of any past winter solstice);
- $GB_{RIF}$ represents the number of leap days intervening between the birth of Christ and the year $A_{RIF}$;
- $G_{RIF}$ represents the day of the winter solstice of the year $A_{RIF}$;
- $H_{RIF}$ represents the Greenwich hour of the day $G_{RIF}$;
- $M$ representss the minutes of the Greenwich hour of the day $G_{RIF}$.

Change of the reference system

Consider the local reference system $(x_1, y_1, z_1)$, represented in **Figure 2B**, having at the observation location, with the $z_1$ axis coincident with the vertical axis of the location, and the $x_1$ and $y_1$ axes placed on the horizontal plane of the location ($x_1$ and $y_1$ axes being facing South and East, respectively). In the local reference system $(x_1, y_1, z_1)$, the following local coordinates as a function of the time variable $t$ are also indicated:

the angle of elevation (or altitude) of the Sun $\delta_1(t)$, that is the angle formed between the line that ideally connects the individual with the center of the solar disk and the horizontal plane (the angle shown in the figure being, for example, positive); and
the Sun azimuth $\theta_1(t)$, that is the hour angle formed by the projection, on the horizontal plane, of the line that ideally connects the individual with the center of the solar disk and the South direction (such angle being for example positive towards West and negative towards East, thus negative in the morning and positive in the afternoon).

Indicating with $(X_o, Y_o, Z_o)$ the coordinates of the unit vector $\underline{s}_o$ in the astronomical reference system $(x, y, z)$, the unit vector $\underline{s}_o$ of the position of the Sun in the astronomical reference system $(x, y, z)$ can be expressed by the following relation:

$$\underline{s}_o = \begin{vmatrix} X_o \\ Y_o \\ Z_o \end{vmatrix} = \begin{vmatrix} cos(\delta_o) \ cos(-\theta_o) \\ cos(\delta_o) \ sin(-\theta_o) \\ sin(\delta_o) \end{vmatrix} \qquad (11)$$

The matrix $R_1$ that describes the rotation from the astronomical reference system $(x, y, z)$ to the local reference system $(x_1, y_1, z_1)$ can be expressed as:

$$R_1 = \begin{vmatrix} sin(Lat) & 0 & -cos(Lat) \\ 0 & 1 & 0 \\ cos(Lat) & 0 & sin(Lat) \end{vmatrix} \qquad (12)$$

Indicating with $(X_1, Y_1, Z_1)$ the coordinates of the vector $\underline{s}_1$ in the local reference system $(x_1, y_1, z_1)$, the unit vector $\underline{s}_1$ of the position of the Sun in the local reference system $(x_1, y_1, z_1)$ can be expressed as:

$$\underline{s_1} = \begin{vmatrix} X_1 \\ \\ Y_1 \\ \\ Z_1 \end{vmatrix} = R_1 \, \underline{s_o} \qquad (13)$$

Since in the local reference system $(x_1, y_1, z_1)$ the angle of elevation of the Sun $\delta 1(t)$ and the Sun azimuth $\theta_1(t)$ can be expressed by the following relations:

$$\delta_1(t) = arcsin(Z_1) \qquad (14)$$

$$\theta_1(t) = arccos\, [X_1 \,/\, cos(\delta_1)] \qquad (15)$$

the relationships previously outlined allow for the unique determination, based on the geographic location of the observer in terms of latitude *Lat* and longitude *Long,* and based on the date of measurement *D* and time of measurement *TMG,* of the position of the Sun in the local reference system $(x_1, y_1, z_1)$ - that is, the angle of elevation of the Sun $\delta_1(t)$ and the Sun azimuth $\theta_1(t)$.

<u>Determination of the geographic location of the individual based on the position of the Sun</u>

By rewriting the relations (14) and (15) in the form:

$$sin(\delta_1) = Z_1 \qquad (14')$$

$$cos(\theta_1) = X_1 \,/\, cos(\delta_1) \qquad (15')$$

from relations (11), (12),(13), the following is obtained:

$$\begin{vmatrix} x_1 \\ \\ y_1 \\ \\ z_1 \end{vmatrix} = \begin{vmatrix} sin(Lat) & 0 & -cos(Lat) \\ \\ 0 & 1 & 0 \\ \\ cos(Lat) & 0 & sin(Lat) \end{vmatrix} \begin{vmatrix} cos(\delta_o)\, cos(-\theta_o) \\ \\ cos(\delta_o)\, sin(-\theta_o) \\ \\ sin(\delta_o) \end{vmatrix}$$

that is:

$$X_1 = sin(Lat)\, cos(\delta_o)\, cos(-\theta_o) - cos(Lat)\, sin(\delta_o)$$

$$Y_1 = cos(\delta_o)\, sin(-\theta_o)$$

$$Z_1 = cos(Lat)\, cos(\delta_o)\, cos(-\theta_o) + sin(Lat)\, sin(\delta_o)$$

By substituting $Z_1$ and $X_1$ into relations (14') and (15'), the following relations are obtained:

$$sin(\delta_1) = cos(Lat)\, cos(\delta_o)\, cos(-\theta_o) + sin(Lat)\, sin(\delta_o) \qquad (14'')$$

$$cos(\theta_1)\, cos(\delta_1) = sin(Lat)\, cos(\delta_o)\, cos(-\theta_o) - cos(Lat)\, sin(\delta_o) \qquad (15'')$$

Setting: $\alpha = cos(\delta_o)$ ; $\beta = sin(\delta_o)$ ; $\gamma = sin(\delta_1)$ ; $\rho = cos(\delta_1)$ ; $\varepsilon = cos(\theta_1)$ (15''') and remembering that:

$$cos(Lat) = \sqrt{1 - sin^2(Lat)}$$ the relations (14") and (15") can be expressed as follows:

$$sin(\delta_1) = \sqrt{1 - sin^2(Lat)}\ cos(-\theta_o)\ \alpha\ + sin(Lat)\ \beta \qquad (16)$$

$$cos(\theta_1)\ cos(\delta_1) = sin(Lat)\ cos(-\theta_o)\ \alpha\ - \sqrt{1 - sin^2(Lat)}\ \beta \qquad (17)$$

From relation (16) is possible to derive:

$$cos(-\theta_o) = [\gamma - sin(Lat)\ \beta\ ]\ /\ [\sqrt{1 - sin^2(Lat)}\ \alpha\ ] \qquad (18)$$

and substituting relation (18) into relation (17) we obtain:

$$\varepsilon\ \rho = sin(Lat)\ [\gamma - sin(Lat)\ \beta\ ]\ /\ [\sqrt{1 - sin^2(Lat)}\ ]\ - \sqrt{1 - sin^2(Lat)}\ \beta \qquad (19)$$

Multiplying both sides of relation (19) by the factor $\sqrt{1 - sin^2(Lat)}$ , and expanding the product on the righthand side, it is possible to obtain:

$$\sqrt{1 - sin^2(Lat)}\ = [\gamma\ sin(Lat) - \beta\ ]\ /\ (\varepsilon\ \rho) \qquad (20)$$

Squaring both sides of relation (20) and expanding the products, it is possible to obtain:

$$(\gamma^2 + \varepsilon^2\ \rho^2)\ sin^2(Lat) - 2\ \gamma\ \beta\ sin(Lat)\ + (\ \beta^2 - \varepsilon^2\ \rho^2\ )\ =\ 0 \qquad (21)$$

The relation (21) represents a second-degree equation with known coefficients and the unknown $sin(Lat)$, with the solution:

$$Sin(Lat)\ =\ \frac{2\gamma\beta \pm \sqrt{4\gamma^2\beta^2 - 4(\gamma^2 + \varepsilon^2\rho^2)(\beta^2 - \varepsilon^2\rho^2)}}{2(\gamma^2 + \varepsilon^2\rho^2)} \qquad (22)$$

and explicating it with respect to the latitude $Lat$ we obtain:

$$Lat = arcsin\ \frac{2\gamma\beta \pm \sqrt{4\gamma^2\beta^2 - 4(\gamma^2 + \varepsilon^2\rho^2)(\beta^2 - \varepsilon^2\rho^2)}}{2(\gamma^2 + \varepsilon^2\rho^2)} \qquad (23)$$

Based on relations (22) and (23), and recalling that $cos(-\theta_o) = cos(\theta_o)$, relation (18) can be made explicit for $\theta_o$ in the following way:

$$\theta_o = arccos\ \frac{\gamma - sin(Lat)\ \beta}{\sqrt{1 - sin^2(Lat)}\ \alpha} \qquad (18')$$

Based on relation (18'), relation (4) can be made explicit with respect to $Long$ in the following way:

$$Long = arccos\ \frac{\gamma - sin(Lat)\ \beta}{\sqrt{1 - sin^2(Lat)}\ \alpha}\ -\ \omega_a\ (TMG + ET - 12) \qquad (24)$$

The relations (23) and (24) allow to determine the geographic position of the individual ($Lat, Long$) in agreement with the measurement of the angle of elevation of the Sun $\delta_1$ (for example, using a sextant) and with the determination of the Sun azimuth $\theta_1$ (which, as discussed in more detail below, is based on the detection angle of the magnetic compass $\alpha_B$ (that is, the detection angle of the Sun) and on the determination of the magnetic declination of the place $\delta$ which, as discussed in greater detail in the following, will be determined simultaneously with the geographical position of the individual), the date of measurement $D$ and the time of measurement $TMG$. In particular, from a practical point of view, this can be done:

- by inserting the angle of elevation of the Sun $\delta_1$ and the Sun azimuth $\theta_1$ into relations (15‴), obtaining the parameters $\gamma$, $\rho$, $\varepsilon$;
- by inserting the date of measurement $D$ and the time of measurement $TMG$ into relations (8), (9), and (10), obtaining the value of the temporal variable $t$;
- by inserting the value of the temporal variable $t$ into equation (3), obtaining the contributions to the equation of time $ETog(t)$ and $ETog(0)$;
- by inserting the temporal variable t and the contributions to the equation of time $ETog(t)$ and $ETog(0)$ into equation (2), obtaining the angular position of the Earth $\alpha(t)$;
- by inserting the angular position of the Earth $\alpha(t)$ into relation (1), obtaining the declination of the Sun $\delta_o(t)$;
- by inserting the declination of the Sun $\delta_o(t)$ into equation (15‴), obtaining the parameters $\alpha$ and $\beta$;
- by inserting the parameters $y$, $p$, $\varepsilon$, $\beta$ into equation (23), obtaining the two latitude values $Lat$;
- by inserting the angular position of the Earth $\alpha(t)$ into equation (7), obtaining the contribution to the equation of time $ETag(t)$;
- by inserting the contributions to the equation of time $ETog(t)$ and $ETag(t)$ into equations (5) and (6), obtaining the value $ETg(t)$;
- by inserting the value $ETg(t)$, the time of measurement $TMG$, the parameters $\alpha$, $\beta$, $\gamma$, and the two values $sin(Lat)$ of relation (22) into relation (24), obtaining the two corresponding values of longitude $Long$.

Since equation (21) is a second degree equation, it has two latitude solutions $Lat$ (that is, $Lat=Lat_1.Lat_2$) which, introduced into relation(24), provide two corresponding values of longitude $Long$ (that is, $Long=Long_1;Long_2$), which correspond to two geographical positions of the individual P1, P2 (that is, $P_1=(Lat_1,Long_1)$ e $P_2=(Lat_2, Long_2)$).

The geographical positions of the individual P1, P2 can be:

- distinct and real, when the hour angle of the Sun associated with latitude $Lat_1$ (hereinafter, hour angle of the Sun $\theta_{01}$) is different from the hour angle of the Sun associated with latitude $Lat2$ (hereinafter, hour angle of the Sun $\theta_{02}$), that is when $\theta_{01} \neq \theta_{02}$;
- coincident and real, when $\theta_{01} = \theta_{02}$ e $Lat_1 = Lat_2$;
- distinct, when $\theta_{01} = \theta_{02}$ e $Lat_1 \neq Lat_2$, with one real latitude value and another fictitious latitude value (the fictitious latitude value corresponding to a shifted reading of $\pi$ radians).

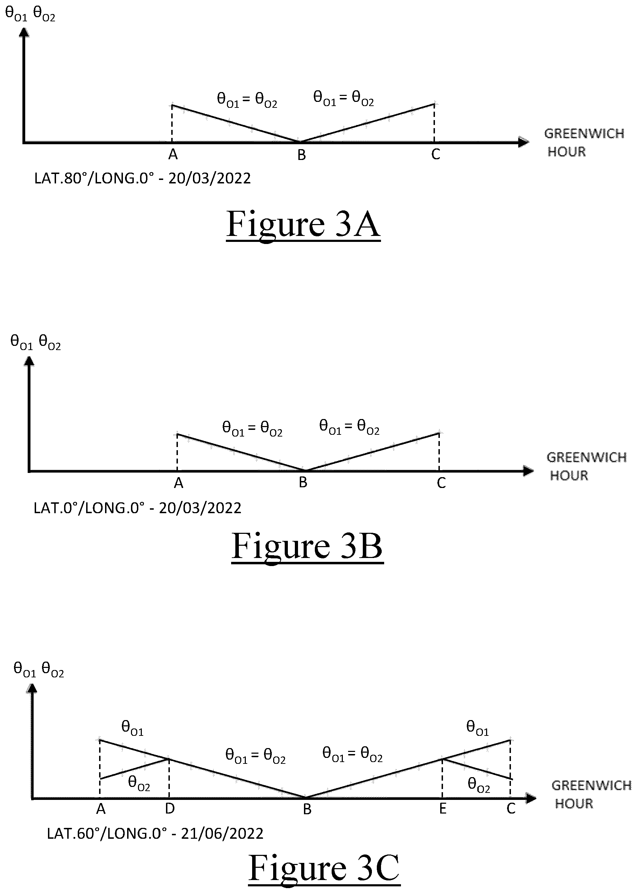

To illustrate these scenarios, reference will be made to the graphs in **Figures 3A-3H,** which represent, on the ordinate axis, the variations of the hour angles of the Sun $\theta_{01}$ e $\theta_{02}$ throughout the day, and, on the horizontal axis, the Greenwich time, on respective days of the year and in respective locations (in particular, each graph refers to a location situated on the Greenwich meridian but placed at a different latitude). In such graphs, points $A$ and $C$ denote the sunrise and sunset hours, respectively, point $B$ denotes noon, and points $D$, $E$, and $F$, $G$ represent the transition hour from two distinct and real geographical positions to either two coincident real geographical positions or two distinct geographical positions, one of which real and the other fictitious (to be discarded, corresponding to a detection shifted by $\pi$ radians).

The graphs of the **Figures 3A** and **3B** were obtained for the day of the vernal equinox in the year 2022 at a location situated on the Greenwich meridian at a latitude of 80° North (**Figure 3A**) and at a location situated on the Greenwich meridian at a latitude of 0°, that is at the equator (**Figure 3B**). From sunrise to sunset $\theta_{01} = \theta_{02}$, $Lat_1 \neq Lat_2$ and there is only one real geographical position (the other geographical position is fictitious and thus should therefore be discarded).

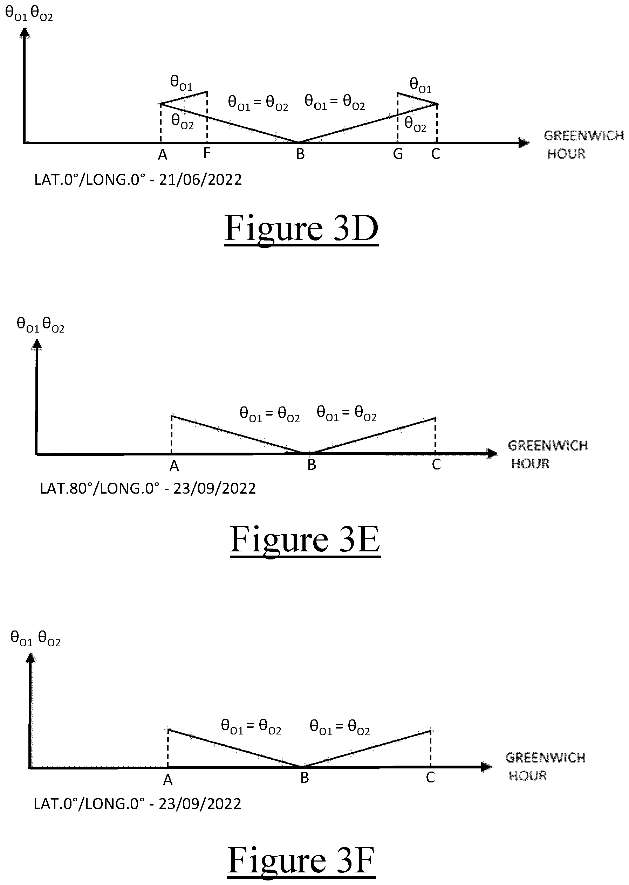

The graphs of the **Figures 3C** and **3D** were obtained for the day of the summer solstice of the year 2022 at a location situated on the Greenwich meridian at a latitude of 60° North (**Figure 3C**) and at a location situated on the Greenwich meridian at a latitude of 0° (**Figure 3D**). In the graph of **Figure 3C,** it can be observed that from sunrise until about 3 hours after sunrise, and from about 3 hours before sunset until sunset, $\theta_{01} \neq \theta_{02}$ (two distinct and real geographical positions), and that in the intermediate hours $\theta_{01} = \theta_{02}$, $Lat_1 \neq Lat_2$, and there is only one real geographical position (the other geographical position is fictitious, and therefore should be discarded). In the graph of the **Figure 3D** it can be observed that from sunrise until about 2 hours after sunrise, and from about 2 hours before sunset until sunset $\theta_{01} \neq \theta_{o2}$ (two distinct and real geographical positions), and that in the intermediate hours $\theta_{01} = \theta_{02}$, $Lat_1 \neq Lat_2$, and there is only one real geographical position (the other geographical position is fictitious, and therefore should be discarded).

The graphs of the **Figures 3E** and **3F** were obtained for the day of the autumn equinox of the year 2022 at a location situated on the Greenwich meridian at a latitude of 80° North (**Figure 3E**) and at a location situated on the Greenwich meridian at a latitude of 0° (**Figure 3F**). For both graphs, from sunrise to sunset, $\theta_{01} = \theta_{02}$ and $Lat_1 \neq Lat_2$, and there is only one real geographical position (the other geographical position is fictitious and, therefore should be discarded).

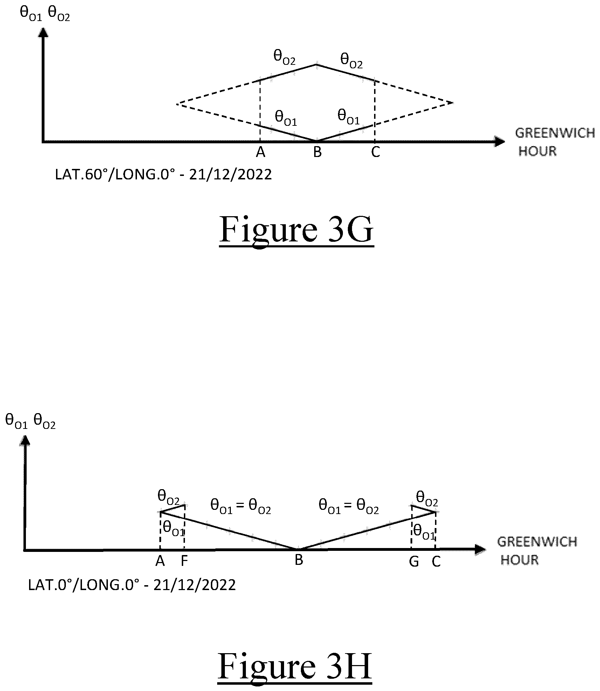

The graphs of the **Figures 3G** and **3H** were obtained for the day of the winter solstice of the year 2022 at a location situated on the Greenwich meridian at a latitude of 60° North (**Figure 3G**) and at a location situated on the Greenwich meridian at a latitude of 0° (**Figure 3H**). In the graph of the **Figure 3G** it can be observed that from sunrise to sunset $\theta_{01} \neq \theta_{02}$, and there are two distinct and real geographical positions. In the graph of the **Figure 3H** it can be observed that from sunrise until about 1 hour after sunrise, and from about 1 hour before sunset to sunset $\theta_{01} \neq \theta_{02}$, and there are two distinct and real geographical positions, while during the intermediate hours $\theta_{01} = \theta_{02}$, $Lat_1 \neq Lat_2$ and there is only one real geographical position (the other geographical position is fictitious and therefore should be discarded).

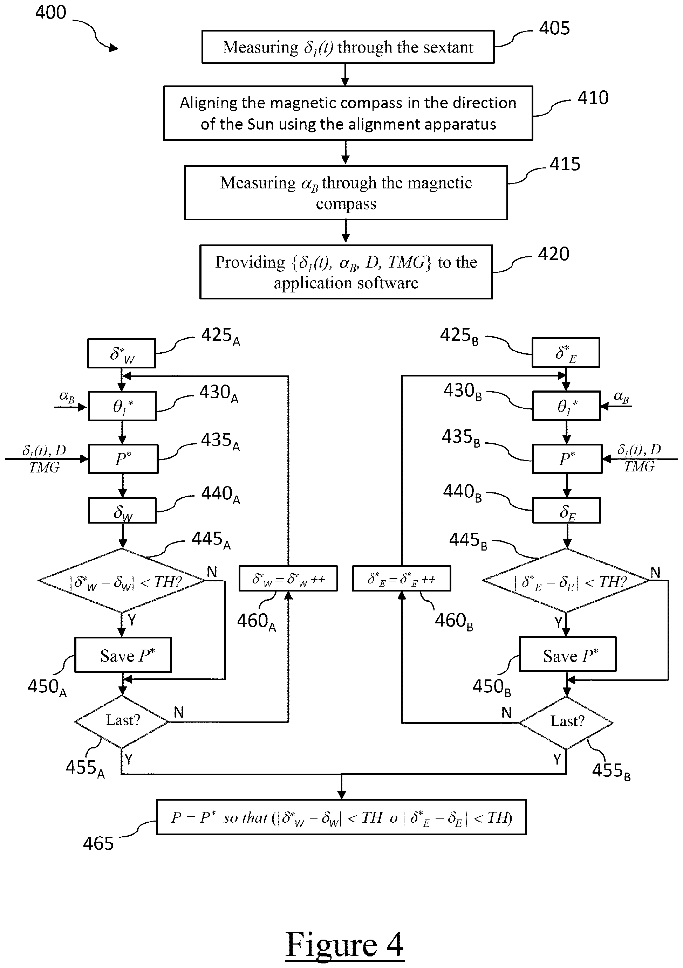

Now with respect to **Figure 4,** it shows an activity diagram of a method **400** in accordance with the claims of the present invention. The method **400** implements a procedure of geo-positioning, in which, as mentioned before:

- a first phase of the procedure of geo-positioning (that is, the phase of measurement, which explains itself in the steps **405-420** of the activity diagram) requires that the individual carries out the measure of the angle of elevation of the Sun and the measure of the detection angle of the Sun, and provides the measurements taken, together with the date and time of measurement, to the software application **APP,** and
- a second phase of the procedure of geo-positioning (that is, the phase of calculation, which explains itself in the steps **425$_A$-460$_A$,425$_B$-460$_B$,465** of the activity diagram), following the phase of measurement, requires the software application **APP,** when executed by the processing device **PD,** to configure the latter to calculate the geographic position of the individual in agreement with the measurements taken and in agreement with the date and time of measurement.

According to one embodiment, the method **400** comprises measuring the angle of elevation of the Sun $\delta_1(t)$, for example through the sextant **ST** (step **405**).

According to one embodiment, the method **400** comprises aligning the magnetic compass **B** in the direction of the Sun by means of the alignment apparatus **AA** (step **410**), for example, by means of the first alignment device **105$_1$** if the angle of elevation of the Sun is between 0° and 45°, or by means of the second alignment device **105$_2$1** if the angle of elevation of the Sun is between 45° and 90°. For this purpose, at step **410,** the method **400** involves that the individual effects the mounting of the first alignment device **105$_1$** or the second alignment device **105$_2$** on the magnetic compass **B** and, by sighting the horizon, moves the corresponding assembly until the intercept element (that is, the reference element **120$_1$** or reference element **120$_2$),** its shadow projected onto the respective receiving plane (that is, the receiving plane **115$_1$** or receiving plane **115$_2$),** and the lubber line of the magnetic compass **B** are aligned with each other (condition that determines the alignment of the magnetic compass **B** in the direction of the Sun).

According to one embodiment, the method **400** comprises, once the magnetic compass **B** has been aligned in the direction of the Sun, measure the detection angle of the Sun $\alpha_B$ (step **415**), for example through the reading of the graduated magnetic disk of the magnetic compass **B.**

For a more convenient measurement of the detection angle of the Sun $\alpha_B$, and in particular to avoid estimating fractional degrees (for example, in the case where the magnetic indicator of the magnetic compass is a graduated magnetic disk displaying only whole degrees), it is desirable that the reading of the detection angle of the Sun $\alpha_B$ is carried out when the lubber line of the magnetic compass is positioned exactly in correspondance of a degree notch of the graduated magnetic disk (since the Sun, in the apparent motion of the Sun, takes exactly 4 minutes to travel an angle of 1 degree, one would have to wait a maximum of 4 minutes to once again have the lubber line of the magnetic compass exactly superimposed on a degree notch of the graduated magnetic disk).

For the purposes of a correct measurement of the detection angle of the Sun $\alpha_B$, it is advisable that the magnetic compass is kept, during the measurement, away from metallic objects (for example, steel watches and glasses with steel frames) and from sources of electromagnetic waves.

Returning to the activity diagram, according to one claim the method **400** comprises providing the measurement of the angle of elevation of the Sun $\delta_1(t)$ and the measurement of the detection angle of the Sun $\alpha_B$, together with the date and time of measurement, to the software application **APP** (step **420**). These parameters, or at least a subset of them, can be provided manually by the individual (for example, they can be entered through an appropriate graphic interface of the software application **APP**). In alternative claims, at step 420 the individual can provide only a subset of such parameters (for example, only the angle of elevation of the Sun $\delta_1(t)$ and the measure of the detection angle of the Sun $\alpha_B$), in which case date and time of measurement can for example be provided or independently derived from the software application **APP** (for example, based on an internal clock of the processing device **PD**).

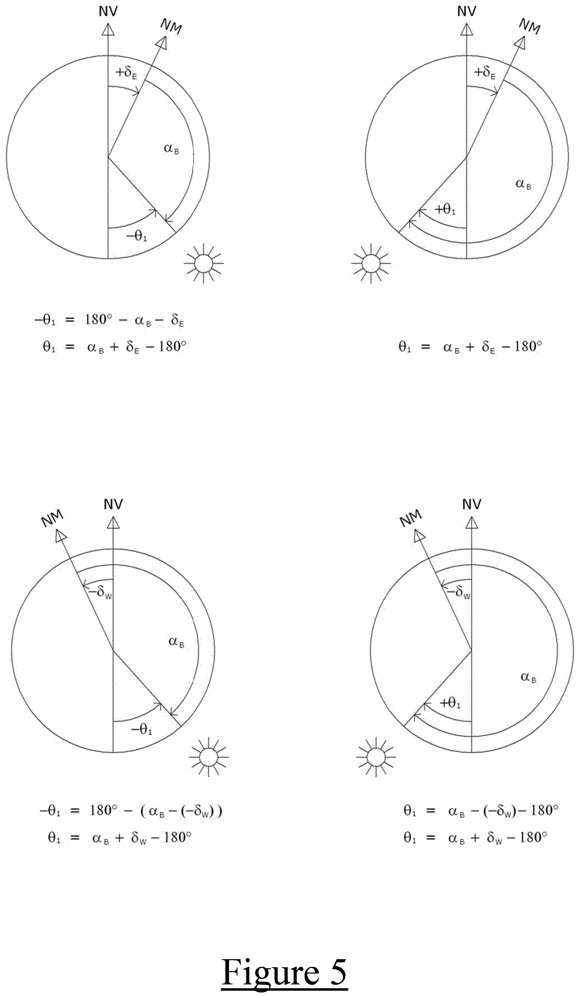

The calculation phase of the geo-positioning procedure, exposed below with reference to steps **425$_A$-460$_A$,425$_B$-460$_B$,465** of the activity diagram, originates from the observation, by the Applicant, that the Sun azimuth $\theta_1$ can be expressed as a function of the magnetic declination $\delta$ (that is, the angle on the horizontal plane between the direction of magnetic North and the direction of geographic North) and the detection angle of the Sun $\alpha_B$, and that the magnetic declination on the surface of the Earth depends on the geographical position of the individual at the time of the measurement and on the date of the measurement. This is shown in the representations in **Figure 5** for different positions of the Sun, where *NV* denotes the direction of Geographic North, NM denotes the direction of Magnetic North, $\delta_E$ denotes

the Easting (positive) magnetic declination, $\delta_W$ denotes the Westing magnetic declination (negative), $\alpha_B$ denotes the detection angle of the Sun, and $\theta_1$ denotes the Sun azimuth (positive towards West, negative towards East).

Since the geographical position of the individual is not known, and indeed its determination represents the purpose of the geo-positioning procedure, the calculation phase elaborated by the Applicant allows, on the basis of the mathematical relationships set out previously, to simultaneously determine the geographical position of the individual (in terms of geographic coordinates *(Lat, Long))* and the relative magnetic declination (that is, the Easting magnetic declination $\delta_E$ or the Westing magnetic declination $\delta_W$).

In general terms, method **400** comprises, in the calculation phase of the geo-positioning procedure:

- determine, for each of a plurality of attempted values of magnetic declination, a respective attempted value of Sun azimuth starting from the detection angle of the Sun $\alpha_B$;
- determine, for each attempted Sun azimuth, a respective candidate geographical position in accordance with the attempted value of Sun azimuth, the measurement of the angle of elevation of the Sun $\delta_1(t)$, the date of the measurement *D* and 1 time of measurement *TMG;*
- for each candidate geographical position, determine, on the basis of a plurality of correspondences between known magnetic declination values and respective known geographical positions, the known magnetic declination value corresponding to the candidate geographical position, and
- determining the geographical position as the candidate geographical position, among the plurality of candidate geographical positions, whose known magnetic declination value differs from the respective attempted value of magnetic declination by an amount less than a predefined threshold amount.

According to one embodiment, the known magnetic declination values comprise a plurality of magnetic declination values referenced to a reference time and each associated with (for example, calculated at) a respective known geographical position, and, for each known geographical position, an indication of a change in the respective known magnetic declination value over time compared to the reference time.

According to one embodiment, the known geographical positions identify the nodes of a network into which the surface of the Earth can be arbitrarily divided (or at least a geographical area thereof, hereinafter referred to as the geographical area of interest, to which wishes to limit the application of the geo-positioning procedure).

According to one embodiment, the known geographical positions identify the nodes of a network of two or more sectors into which the geographical area of interest can be arbitrarily divided.

By way of mere non limiting example, the geographical area of interest can be delimited to the North by the 64th parallel and to the South by the 44th parallel (such geographical area of interest advantageously defines the portion of the surface of the Earth in which the majority of recreational navigation takes place), and is divided into four sectors *NE, NW, SE, SW,* for example each delimited by the following nodes:

- the sector *NE* is delimited by the following nodes:

| $N_{0,0}$ | $(0°_{lat}, 0°_{long})$ |
|---|---|
| $N_{0,45}$ | $(0°_{lat}, 180°_{long})$ |
| $N_{16,45}$ | $(64°_{lat}, 180°_{long})$ |
| $N_{16,0}$ | $(64°_{lat}, 0°_{long})$ |

- the sector *NW* is delimited by the following nodes:

| $N_{0,0}$ | $(0°_{lat}, 0°_{long})$ |
|---|---|
| $N_{0,45}$ | $(0°_{lat}, -180°_{long})$ |
| $N_{16,45}$ | $(64°_{lat}, -180°_{long})$ |
| $N_{16,0}$ | $(64°_{lat}, 0°_{long})$ |

- the sector SE is delimited by the following nodes:

| $N_{0,0}$ | $(\mathring{0}_{lat}, \mathring{0}_{long})$ |
|---|---|
| $N_{0,45}$ | $(\mathring{0}_{lat}, 18\mathring{0}_{long})$ |

(continued)

| | |
|---|---|
| $N_{16,45}$ | $(-44°_{lat}, 180°_{long})$ |
| $N_{16,0}$ | $(-44°_{lat}, 0°_{long})$ |

- the *SW* is delimited by the following nodes:

| | |
|---|---|
| $N_{0,0}$ | $(0°_{lat}, 0°_{long})$ |
| $N_{0,45}$ | $(0°_{lat}, 180°_{long})$ |
| $N_{16,45}$ | $(-44°_{lat}, 180°_{long})$ |
| $N_{16,0}$ | $(-44°_{lat}, 0°_{long})$ |

Merely by way of non limiting example, each of the four sectors *NE, NW, SE, SW* identifies a mesh grid of 4° latitude and 4° longitude.

According to one embodiment, known magnetic declination values and the indications of their respective variations over time can be stored in the software application.

In the non limiting example discussed above, the known values $\delta$ of magnetic declination at each point of the grid of each of the four sectors *NE, NW, SE, SW* and the indications of the respective variations over time $\varDelta$ in each of the four sectors *NE, NW, SE, SW* (indicated by *NEV, NWV, SEV, SWV,* respectively) can be stored in the software application, for example according to a matrix representation:

$$NE = \begin{bmatrix} \delta_{0,0} & \cdots & \delta_{0,45} \\ \vdots & \ddots & \vdots \\ \delta_{16,0} & \cdots & \delta_{16,45} \end{bmatrix} \qquad NW_{,} = \begin{bmatrix} \delta_{0,0} & \cdots & \delta_{0,45} \\ \vdots & \ddots & \vdots \\ \delta_{16,0} & \cdots & \delta_{16,45} \end{bmatrix}$$

$$SE = \begin{bmatrix} \delta_{0,0} & \cdots & \delta_{0,45} \\ \vdots & \ddots & \vdots \\ \delta_{11,0} & \cdots & \delta_{16,45} \end{bmatrix} \qquad SW = \begin{bmatrix} \delta_{0,0} & \cdots & \delta_{0,45} \\ \vdots & \ddots & \vdots \\ \delta_{11,0} & \cdots & \delta_{16,45} \end{bmatrix}$$

$$NEV = \begin{bmatrix} \varDelta_{0,0} & \cdots & \varDelta_{0,45} \\ \vdots & \ddots & \vdots \\ \varDelta_{16,0} & \cdots & \varDelta_{16,45} \end{bmatrix} \qquad NWV = \begin{bmatrix} \varDelta_{0,0} & \cdots & \varDelta_{0,45} \\ \vdots & \ddots & \vdots \\ \varDelta_{16,0} & \cdots & \varDelta_{16,45} \end{bmatrix}$$

$$SEV = \begin{bmatrix} \varDelta_{0,0} & \cdots & \varDelta_{0,45} \\ \vdots & \ddots & \vdots \\ \varDelta_{11,0} & \cdots & \varDelta_{16,45} \end{bmatrix} \qquad SWV = \begin{bmatrix} \varDelta_{0,0} & \cdots & \varDelta_{0,45} \\ \vdots & \ddots & \vdots \\ \varDelta_{11,0} & \cdots & \varDelta_{16,45} \end{bmatrix}$$

According to one embodiment, the determination, on the basis of the plurality of correspondences between known magnetic declination values and respective known geographical positions, of the known magnetic declination value corresponding to the candidate geographical position is obtained by linear interpolation of the known declination values magnetic relative to the four geographical points of the grid around the candidate geographical position.

According to one embodiment, the attempted values of magnetic declination can comprise a plurality of attempted positive values of magnetic declination and a plurality of attempted negative values of magnetic declination. In the non limiting example discussed above of a geographical area of interest, in which the magnetic declination varies from 0° to +39° (positive East magnetic declination) and from 0° to -55° (negative West magnetic declination), the attempted values of magnetic declination include a plurality of positive attempted values of magnetic declination $\delta^*_E$ and a plurality of attempted negative values of magnetic declination $\delta^*_W$.

Going back to the activity diagram, it shows by way of example the steps of method **400** performed considering the attempted negative values of magnetic declination $\delta^*_W$ (steps **425$_A$-460$_A$**) and the steps of method **400** performed considering the attempted positive values of magnetic declination $\delta^*_E$ (steps **425$_B$-460$_B$**).

Since the steps performed considering the attempted negative values of magnetic declination $\delta^*W$ (that is, steps

$425_A$-$460_A$) are analogous to the steps performed considering the attempted positive values of magnetic declination $\delta^*_E$ (that is, steps $425_B$-$460_B$), they will be discussed jointly. In any case, such mode of discussion is not intended to be indicative of a necessary concomitance of execution of the steps $425_A$-$460_A$ with respect to the steps $425_B$-$460_B$: in fact, without losing generality, the sequence of steps $425_A$-$460_A$ can be performed at any time (for example, before, during, or after) the step sequence $425_B$-$460_B$, and each step of the step sequence $425_A$-$460_A$ can be executed at any time (for example, before, during, or after) with respect to the corresponding step of the step sequence $425_B$-$460_B$.

According to one embodiment, the method **400** comprises, for a (first) attempted value of magnetic declination $\delta^*_W$, $\delta^*_E$ (step $425_A$,$425_B$), determining, starting from the detection angle of the Sun $\alpha_B$, the respective attempted value of the Sun azimuth $\theta_1{}^*$ (step $430_A$,$430_B$). According to one claim, the attempted values of the Sun azimuth $\theta_1{}^*$ (for the attempted negative values of magnetic declination $\delta^*_W$ and for the attempted positive values of magnetic declination $\delta^*_E$) can be determined based on the reported relationships in Figure 5, that is, respectively:

$$\theta_1{}^* = \alpha_B + \delta^*_W - 180°$$

$$\theta_1{}^* = \alpha_B + \delta^*_E - 180°$$

According to one embodiment, the method **400** comprises determining, for the attempted Sun azimuth $\theta_1{}^*$, a respective candidate geographical position $P^*$ in accordance with the attempted Sun azimuth, the measurement of the angle of elevation of the Sun $\delta_1(t)$, the date of the measurement $D$ and the time of the measurement $TMG$ (step $435_A$,$435_B$ ). In accordance with one claim, the candidate geographical position $P^*$ is determined based on the relations (23) and (24) discussed above, obtaining in this way candidate latitude and longitude values $Lat^*$,$Long^*$ for the geographical position P $^*$.

According to one embodiment, the method **400** comprises determining, on the basis of the correspondences between the known geographical positions and the respective known values of magnetic declination (including their variations over time), the known value of magnetic declination $\delta_W$, $\delta_E$ corresponding to the candidate geographical position $P^*$ (step $440_A$,$440_B$).

According to one embodiment, the method **400** comprises, if the known value of magnetic declination $\delta_W$, $\delta_E$ corresponding to the candidate geographical location $P^*$ differs from the respective attempted value of magnetic declination value $\delta^*_W$, $\delta^*_E$ by an amount less than a predefined threshold quantity $TH$ (step $445_A$,$445_B$, output branch Y), save the candidate geographical position $P^*$ (step $450_A$,$450_B$). Without loss of generality, the predefined threshold quantity $TH$ is preferably between 0,01 and 0,1, for example between 0,02 and 0,06. By way of non limiting example, the default threshold quantity $TH$ is equal to 0,03.

According to one embodiment, the method **400** comprises, if the attempted value of magnetic declination $\delta^*_W$, $\delta^*_E$ of the current iteration is not the last attempted value of magnetic declination $\delta^*_W$, $\delta^*_E$ considered of the plurality of attempted values of magnetic declination $\delta^*_W$, $\delta^*_E$ (step $455_A$,$455_B$, output branch N), select a new attempted value of magnetic declination $\delta^*_W$, $\delta^*_E$ (step $460_A$,$460_B$), for example an attempted next value of magnetic declination $\delta^*_W$, $\delta^*_E$ within the respective magnetic declination variability range (in the example in question, $-55° \leq \delta^*_W \leq 0$ e $0 \leq \delta^*_E \leq +39°$) and reiterate the process starting from step $430_A$,$430_B$.

According to one embodiment, the method 400 comprises, if the attempted value of magnetic declination $\delta^*_W$, $\delta^*_E$ of the current iteration is the last attempted value of magnetic declination $\delta^*_W$, $\delta^*_E$ considered of the plurality of attempted values of magnetic declination $\delta^*_W$, $\delta^*_E$ (step $455_A$,$455_B$, output branch Y), determine the geographical position P as the candidate geographical position P $^*$, among the candidate geographical positions $P^*$, whose known value of magnetic declination $\delta^*_W$ differs from the respective attempted value of magnetic declination $\delta^*_W$ by an amount less than the predefined threshold amount $TH$, or whose known value of magnetic declination $\delta_E$ differs from the respective attempted value of magnetic declination $\delta_E$ by the same amount (step **465**). In alternative claims (not shown) the geographical position P can for example be determined as the candidate geographical position P*whose known value of magnetic declination ($\delta_W$ or $\delta_E$) differs from the respective attempted value of magnetic declination ($\delta_W$ or $\delta_E$) of the smallest quantity.

Going back to step $445_A$,$445_B$, in accordance with one claim, the method **400** comprises, if the known value of the magnetic declination $\delta_W$, $\delta_E$ corresponding to the candidate geographical position $P^*$ differs from the respective attempted value of magnetic declination $\delta^*_W$, $\delta^*_E$ by an amount greater than the default threshold amount $TH$ (step $445_A$,$445_B$, output rung **N**), and if the attempted value of magnetic declination $\delta^*_W$, $\delta^*_E$ of the current iteration is not the last attempted value of magnetic declination $\delta^*_W$, $\delta^*_E$ considered of the plurality of attempted values of magnetic declination $\delta^*_W$, $\delta^*_E$ (step $455_A$,$455_B$, output branch **N**), select a new attempted value of magnetic declination $\delta^*_W$, $\delta^*_E$ (step $460_A$,$460_B$) and repeat the process starting from step $430_A$,$430_B$.

The Applicant has ascertained that the geographical position determined by the system and method in accordance with the present invention presents an error of between 1' of degree (in ideal measurement conditions, for example when the magnetic compass is not subject to electromagnetic disturbances and is perfectly aligned in the direction of the Sun, and the lubber line is positioned exactly at one degree notch of the graduated magnetic disk) and 40' of degree (in non-ideal measurement conditions).

Naturally, in order to satisfy local and specific requirements, a person skilled in the art can apply many logical and/or physical modifications and alterations to the disclosure described above. More specifically, although the present disclosure has been described with some degree of particularity with reference to preferred claims, it should be understood that various omissions, substitutions, and changes in form and details, as well as other claims, are possible. In particular, different claims of the disclosure can also be practiced without the specific details set forth in the preceding description to provide a more complete understanding; on the contrary, well-known characteristics may have been omitted or simplified so as not to burden the description with unnecessary details. Furthermore, it is expressly intended that specific elements and/or steps of the method described in connection with any discussed claim of the disclosure may be incorporated into any other claim.

In particular, similar considerations apply if the system (or kit) has a different structure or comprises equivalent components. In any case, any of its components can be separated into several elements, or two or more components can be combined into a single element; furthermore, each component can be replicated to support the execution of the corresponding operations in parallel. Note also that (unless otherwise indicated) any interaction between different components generally does not need to be continuous, and may be direct or indirect through one or more intermediaries.

Furthermore, similar considerations apply if the present invention is implemented by equivalent methods (using similar steps with the same functions of multiple steps or portions of multiple steps, removing some non essential steps or adding additional optional steps); furthermore, the steps can be performed in a different order, in parallel or overlapped (at least partially).

## Claims

1.   Kit (AA, APP) for determining the geographical position of an individual (P) on the sea surface, the kit comprising:

an alignment apparatus (**AA**) capable of being rigidly connected to a magnetic compass (**BM**) to align a lubber line of the magnetic compass in the direction of the Sun, wherein, when the lubber line of the magnetic compass (**BM**) is aligned in the direction of the Sun, an angle between the lubber line and the direction of the Magnetic North on a horizontal plane indicated by the magnetic indicator of the magnetic compass, represents a detection angle ($a_B$) of the Sun;
a software application (**APP**) executable by a processing device (*PD*), the software application being configured to, when executed by the processing device, cause the processing device to determine said geographical position as a function of:

- said detection angle ($a_B$) of the Sun;
- an angle of elevation ($d_1(t)$) of the Sun, and
- a date *(D)* and time *(TMG)* of measurement of said detection angle ($a_B$) of the Sun and of said angle of elevation ($d_1(t)$) of the Sun.

2.   Kit (**AA**, (**AA**, **APP**) according to claim 1, wherein the software application (**APP**) is configured to, when executed by the processing device *(PD),* cause the processing device to:

- determine, for each of a plurality of attempt values of magnetic declination ($\delta^*_W$, $\delta^*_E$), a respective Sun azimuth attempt value ($\theta_1^*$), from said detection angle ($a_B$) of the Sun;
- determine, for each Sun azimuth attempt value ($\theta_1^*$), a respective candidate geographical position (*P\**) according to said Sun azimuth attempt value, with the angle of elevation ($d_1(t)$) of the Sun, and with date *(D)* time *(TMG)* of measurement
- for each candidate geographical position (P\*), determine, on the basis of a plurality of correspondences between known values of magnetic declination ($\delta_W$, $\delta_E$) and respective known geographical positions, the known value of magnetic declination corresponding to said candidate geographical position (P\*)
- determine said geographical position as the candidate geographical position (P\*), among the plurality of candidate geographical positions, whose known value of magnetic declination ($\delta_W$, $\delta_E$) differs from the respective attempt value of magnetic declination ($\delta^*_W$, $\delta^*_E$) by a quantity less than a predefined threshold quantity *(TH)*.

3.   Kit (**AA, APP**) according to claim 2, wherein said plurality of attempt values of magnetic declination ($\delta^*_W$, $\delta^*_E$) comprises a plurality of negative attempt values of magnetic declination ($\delta^*_W$) and a plurality of positive attempt values

of magnetic declination ($\delta^*_E$), and wherein the known values of magnetic declination ($\delta_W$, $\delta_E$) comprise negative known values of magnetic declination ($\delta_W$) and positive known values of magnetic declination ($\delta_E$), wherein the software application (APP) is configured to, when executed by the processing device (PD), cause the processing device to:

determine said geographical position as the candidate geographical position (P*), among the plurality of candidate geographical positions, whose negative known value of magnetic declination ($\delta_W$) differs from the respective negative attempt value of magnetic declination ($\delta_W$) of said quantity, or as the candidate geographical position (P*), among the plurality of candidate geographical positions, whose positive known value of magnetic declination ($\delta_E$) differs from the respective positive attempt value of magnetic declination ($\delta_E$) of said quantity.

4. Kit (AA, APP) according to claim 2 or 3, wherein said plurality of correspondences between known values of magnetic declination ($\delta_W$, $\delta_E$) and respective known geographical positions comprises:

a plurality of known values of magnetic declination ($\delta_W$, $\delta_E$) referred to a reference time and each associated with a respective known geographical position; and
for each known geographical position, an indication of a variation over time of the respective known value of magnetic declination with respect to the reference time.

5. Kit (AA, APP) according to any one of the previous claims, wherein the alignment apparatus (AA) comprises a first alignment device ($105_1$) suitable for aligning the lubber line of the magnetic compass (BM) in the direction of the Sun when the angle of elevation ($d_1(t)$) of the Sun is within a first range of angles of elevation of the Sun, and a second alignment device ($105_2$) suitable for aligning the lubber line of the magnetic compass (BM) in the direction of the Sun when the angle of elevation ($d_1(t)$) of the Sun is within a second range of angles of elevation of the Sun different from the first range.

6. Kit (AA, APP) according to claim 5, wherein in each of said first ($105_1$) and second ($105_2$) alignment device comprises a respective receiving plane ($115_1$, $115_2$) and, perpendicularly to the receiving plane, a respective reference element ($120_1$, $120_2$) suitable for, when invested by sunlight, projecting a corresponding shadow on the respective receiving plane ($115_1$, $115_2$), and wherein each of said first ($105_1$) and second ($105_2$) alignment device, when rigidly connected to the magnetic compass (BM), allows to determine the alignment of the lubber line of the magnetic compass in the direction of the Sun when the respective reference element ($120_1$, $120_2$), the shadow of the reference element projected on the respective receiving plane ($115_1$, $115_2$), and the lubber line of the magnetic compass (BM) are aligned with each other.

7. Kit (AA, APP) according to claim 6, wherein the receiving plane ($115_1$) of the first alignment device ($105_1$) is parallel to a plane of the magnetic compass (BM) when the first alignment device is rigidly connected to the magnetic compass, and wherein the receiving plane ($115_2$) of the second alignment device ($105_2$) is inclined by 45° with respect to the plane of the magnetic compass (BM) when the second alignment device is rigidly connected to the magnetic compass.

8. Kit (AA, APP) according to claim 6 or 7, wherein the first alignment device ($105_1$) comprises a reflective element (125) for reflecting the shadow of the respective reference element ($120_1$) projected onto the respective receiving plane ($115_1$).

9. A system (100) comprising the kit (AA, APP) according to any one of the previous claims, and at least one of said magnetic compass (BM) and a sextant (ST) for measuring said angle of elevation ($d_1(t)$) of the Sun.

10. Method (400) comprising:

measuring (405) the angle of elevation ($d_1(t)$) of the Sun;
rigidly connecting the alignment apparatus (AA) of the kit (AA, APP) according to any of the previous claims to a magnetic compass (BM);
aligning (410) the magnetic compass in the direction of the Sun by means of the alignment apparatus;
measuring (415) a detection angle of the Sun ($a_B$) as the angle between the lubber line of the magnetic compass and the direction of the Magnetic North on a horizontal plane;
providing (420) the measurement of the angle of elevation of the Sun, the measurement of said detection angle of the Sun ($a_B$), and a date (D) and a time (TMG) of measurement of said detection angle of the Sun ($a_B$) and of said angle of elevation ($d_1(t)$) of the Sun; to the software application (APP) of said kit; and
determining ($425_A$-$460_A$, $425_B$-$460_B$, 465) said geographical position as a function of said detection angle of the Sun ($a_B$), said angle of elevation ($d_1(t)$) of the Sun; and said date *(D)* and time *(TMG)* of measurement.

Figure 1A

EP 4 585 883 A2

**Figure 1B**

AA

$120_2$

$105_2$

$110_{2S}$

$110_{2M}$

$115_2$

$140_{2L}$

$115_{2B}$

$135_{2L}$

$140_{2R}$

$135_{2R}$

$135_{2R}$

$135_{2L}$

Figure 1C

Figure 1D

Figure 1E

**North Star**

**Sun**

**South**

**East**

Equatorial plane

Figure 2A

**Sun**

**East**

**South**

Horizontal plane

Figure 2B

$\theta_{O1} = \theta_{O2}$     $\theta_{O1} = \theta_{O2}$

GREENWICH HOUR

A          B          C

LAT.80°/LONG.0° - 20/03/2022

## Figure 3A

$\theta_{O1} = \theta_{O2}$     $\theta_{O1} = \theta_{O2}$

GREENWICH HOUR

A          B          C

LAT.0°/LONG.0° - 20/03/2022

## Figure 3B

$\theta_{O1}$          $\theta_{O1}$

$\theta_{O1} = \theta_{O2}$     $\theta_{O1} = \theta_{O2}$

$\theta_{O2}$          $\theta_{O2}$

GREENWICH HOUR

A     D          B          E     C

LAT.60°/LONG.0° - 21/06/2022

## Figure 3C

$\theta_{O1}\theta_{O2}$

$\theta_{O1}$
$\theta_{O2}$
$\theta_{O1} = \theta_{O2}$   $\theta_{O1} = \theta_{O2}$
$\theta_{O1}$
$\theta_{O2}$

GREENWICH
HOUR

A   F           B           G   C

LAT.0°/LONG.0° - 21/06/2022

# Figure 3D

$\theta_{O1}\theta_{O2}$

$\theta_{O1} = \theta_{O2}$   $\theta_{O1} = \theta_{O2}$

GREENWICH
HOUR

A           B           C

LAT.80°/LONG.0° - 23/09/2022

# Figure 3E

$\theta_{O1}\theta_{O2}$

$\theta_{O1} = \theta_{O2}$   $\theta_{O1} = \theta_{O2}$

GREENWICH
HOUR

A           B           C

LAT.0°/LONG.0° - 23/09/2022

# Figure 3F

$\theta_{O1}$ $\theta_{O2}$

$\theta_{O2}$     $\theta_{O2}$

$\theta_{O1}$     $\theta_{O1}$

GREENWICH
HOUR

A     B     C

LAT.60°/LONG.0° - 21/12/2022

# Figure 3G

$\theta_{O1}$ $\theta_{O2}$

$\theta_{O2}$     $\theta_{O1} = \theta_{O2}$     $\theta_{O1} = \theta_{O2}$     $\theta_{O2}$

$\theta_{O1}$     $\theta_{O1}$

GREENWICH
HOUR

A   F     B     G   C

LAT.0°/LONG.0° - 21/12/2022

# Figure 3H

28

400

Measuring $\delta_l(t)$ through the sextant — 405

Aligning the magnetic compass in the direction of the Sun using the alignment apparatus — 410

Measuring $\alpha_B$ through the magnetic compass — 415

Providing $\{\delta_l(t),\ \alpha_B,\ D,\ TMG\}$ to the application software — 420

$\delta^*_W$ — 425$_A$

$425_B$ — $\delta^*_E$

$\alpha_B \rightarrow \theta_l^*$ — 430$_A$

430$_B$ — $\theta_l^* \leftarrow \alpha_B$

$\dfrac{\delta_l(t),\ D}{TMG} \rightarrow P^*$ — 435$_A$

435$_B$ — $P^* \leftarrow \dfrac{\delta_l(t),\ D}{TMG}$

$\delta_W$ — 440$_A$

440$_B$ — $\delta_E$

445$_A$ — $|\delta^*_W - \delta_W| < TH?$ — N

$\delta^*_W = \delta^*_W$ ++

640$_A$

$\delta^*_E = \delta^*_E$ ++

460$_B$

$|\delta^*_E - \delta_E| < TH?$ — 445$_B$ — N

Y

Save $P^*$

450$_A$

Save $P^*$ — 450$_B$

Y

Last? — N

455$_A$ — Y

N — Last?

Y — 455$_B$

$P = P^*$ so that $(|\delta^*_W - \delta_W| < TH$ o $|\delta^*_E - \delta_E| < TH)$

465

Figure 4

$$-\theta_1 = 180° - \alpha_B - \delta_E$$
$$\theta_1 = \alpha_B + \delta_E - 180°$$

$$\theta_1 = \alpha_B + \delta_E - 180°$$

$$-\theta_1 = 180° - (\alpha_B - (-\delta_W))$$
$$\theta_1 = \alpha_B + \delta_W - 180°$$

$$\theta_1 = \alpha_B - (-\delta_W) - 180°$$
$$\theta_1 = \alpha_B + \delta_W - 180°$$

# Figure 5